# EUROPÄISCHE PATENTSCHRIFT

(11) **EP 3 549 818 B1**
(45) Veröffentlichungstag und Bekanntmachung des Hinweises auf die Patenterteilung: **02.08.2023**
(21) Anmeldenummer: 19000119.8
(22) Anmeldetag: 07.03.2019
(51) Int. Cl.: B60N 2/00, B60N 2/70

(54) **FAHRZEUGSITZ MIT EINER SENSOREINHEIT ZUR SITZBELEGUNGSERKENNUNG**
VEHICLE SEAT WITH A SENSOR UNIT FOR DETECTING SEAT OCCUPANCY
SIÈGE DE VÉHICULE DOTÉ D'UNE UNITÉ DE CAPTEUR PERMETTANT DE DÉTECTER L'OCCUPATION DE SIÈGE

(30) Priorität: 03.04.2018 DE 202018001736 U
(43) Veröffentlichungstag der Anmeldung: 09.10.2019
(73) Patentinhaber: I.G. Bauerhin GmbH, 63584 Gründau (DE)
(72) Erfinder: Kraus, André, 63579 Freigericht (DE); Harnischfeger, Andreas, 63637 Jossgrund (DE)
(74) Vertreter: Grimm, Ekkehard

(56) Entgegenhaltungen:
- EP-A2- 2 492 137
- WO-A1-2016/171143
- WO-A1-2019/149602
- DE-U1-202017 005 093
- FR-A1- 2 853 057
- FR-A1- 3 056 476

## Beschreibung

Die vorliegende Erfindung betrifft einen Fahrzeugsitz mit einer Sensoreinheit zur Sitzbelegungserkennung gemäß dem Oberbegriff des Anspruchs 1.

Eine solche Sensoreinheit ist aus der DE 20 2017 005 093 U1 bekannt. Sie ist auf der der Sitzseite eines Schaumpolsters abgewandten Unterseite, die auch als B-Seite bezeichnet wird, angeordnet. Bei Belastung des Schaumpolsters durch eine auf dem Sitz sitzende Person liegt die Sensoreinheit zumindest teilweise an Bereichen des Schaumpolsters an. Eine derartige Sensoreinheit umfasst eine Trägerstruktur, an oder auf der mindestens ein Sensorelement angeordnet ist.

Im Stand der Technik sind verschiedene Maßnahmen bekannt, um eine solche Sensoreinheit für die Sitzbelegungserkennung in einen Fahrzeugsitz zu integrieren oder an diesem zu halten.

Die DE 197 52 976 C2 beschreibt die Integration eines flexiblen und druckempfindlichen Schalters in einen aus Polyurethanschaum gebildeten Polsterkörper eines Kraftfahrzeugsitzes. Der Schalter ist in einer auf der der Sitzfläche gegenüberliegenden Seite des Polsterkörpers angeordneten Aussparung eingelassen und mit einem Einlegeteil aus Polyurethanschaum abgedeckt, wobei dieses Einlegeteil den Schalter stützt. Polsterkörper und Einlegeteil liegen auf einem Metallblech auf, das gleichzeitig als Einstellvorrichtung dient. Der Schalter besteht aus einem flexiblen Trägerfilm, einem flexiblen Abdeckfilm und zwei dazwischen angeordneten elektrisch leitfähigen Schichten. Bei einer auf die Sitzfläche wirkenden Kraft wird diese über den Polsterkörper auf den Schalter übertragen, wobei dann die beiden elektrisch leitfähigen Schichten des Schalters aufeinander gedrückt werden. Über einen elektrischen Stromfluss ist damit die Sitzbelegung erkennbar.

Die DE 20 2017 005 093 U1 beschreibt eine Vorrichtung zur Erfassung einer Sitzbelegung an einem Kraftfahrzeugsitz, die auch in eine Rücksitzbank eines Kraftfahrzeugs integrierbar ist. Der Kraftfahrzeugsitz weist dabei einen Sitzschaum mit einer Sitzfläche und einen Strukturrahmen auf, wobei entweder der Strukturrahmen den Sitzschaum stützt oder der Sitzschaum auf einem den Strukturrahmen umgebenden Hartschaumkörper angeordnet ist. Auf einer zur Sitzfläche gegenüberliegenden Seite des Sitzschaums ist ein Druckschalter positioniert, der an einer Halteplatte befestigt ist. Die Halteplatte ist über eine Hakenverbindung mit dem Strukturrahmen verbunden. Hierfür ist die Hakenverbindung auf der Unterseite des Sitzschaums durch diesen zum Strukturrahmen, der als Drahtrahmen ausgestaltet ist, geführt.

Die DE 10 2014 014 395 A1 beschreibt eine Drucksensor-Einheit zum Detektieren des Belegungszustands eines Kraftfahrzeugsitzes mit einer im Wesentlichen formstabilen Trägerplatte, auf deren Oberseite ein Foliendrucksensor angeordnet ist. Der Foliendrucksensor umfasst mindestens eine Trägerfolie und mindestens ein Sensorelement, das auf der Trägerfolie angeordnet ist. Die Trägerfolie besitzt mindestens ein Positionierungsmittel, das einem korrespondierenden Positionierungsmittel an der Trägerplatte zugeordnet ist. Das mindestens eine Positionierungsmittel ist eine sich von einer Seitenkante der Trägerfolie erstreckende Haltelasche mit einem Steg, der an seinem freien Ende mindestens einen Halteabschnitt aufweist, der sich an dem korrespondierenden Positionierungsmittel der Trägerplatte verhakt.

Die DE 10 2008 005 399 A1 beschreibt einen Funktionseinleger, der aus einem Vlies oder einem Textil gebildet ist und zum Beispiel für die Sitzbelegungserkennung oder eine Sitzheizung einsetzbar ist. Der Funktionseinleger ist unterhalb des Bezugs auf der Oberseite eines Sitzpolsters aufgelegt und an zwei gegenüberliegenden Seiten in einem Abspanngraben mittels Laschen an einem Abspanndraht befestigt. Hierzu werden Verankerungsteile verwendet. Jedes Verankerungsteil besitzt an dem einen Ende eine knopfartige Platte, die in eine Öffnung der jeweiligen Lasche eingreift, und an dem anderen Ende ein Klemmteil, das in den Abspanndraht eingreift.

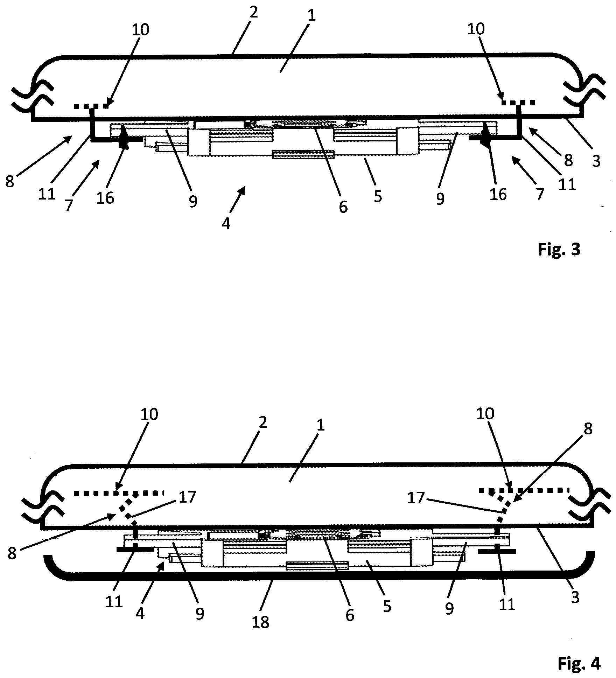

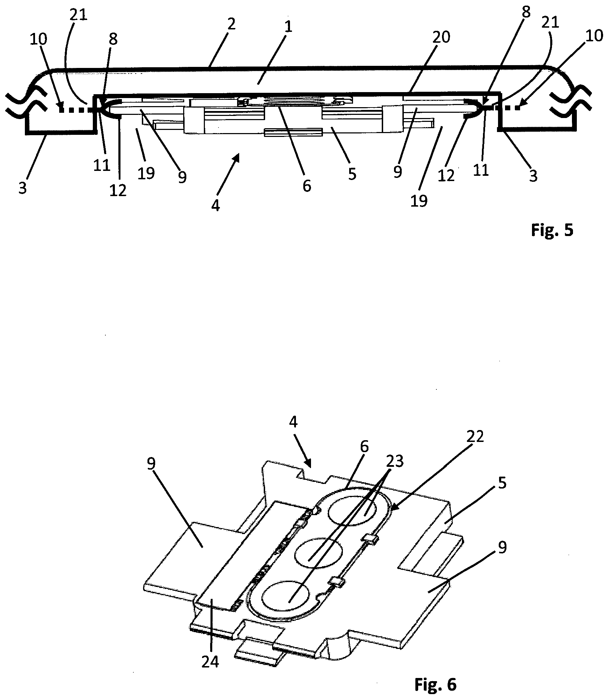

Die FR 3 056 476 A1 beschreibt einen Sitz mit einem Sitzkissen und einem Rückenlehnenelement. Das Sitzkissen umfasst ein elastisch deformierbares Polsterelement, das in seiner Unterseite eine Ausnehmung aufweist, auf deren Bodenfläche ein Detektorelement angeordnet ist. Das Detektorelement ist auf einer Platte gehalten. Entsprechend der Ausführungsformen, wie sie in den Figuren 4A und 4B dargestellt sind, sind in der Platte Löcher vorhanden, in die dem Schaumpolster zugeordnete Laschenelemente eingreifen und sich verrasten. In der Ausführungsform, wie sie in Figur 6B dargestellt ist, greifen vertikale Wände an der Platte, die das Detektorelement trägt, in Wandteile, die der Bodenfläche der Ausnehmung in dem Polsterelement zugeordnet sind, ein und verrasten ineinander.

Die WO 2016/171143 A1 bezieht sich auf eine Lasterfassungsvorrichtung mit einem Schalter, die in einer Ausnehmung eines Sitzpolsters angeordnet ist. Der Schalter wird über einen Träger gehalten, der an dem Sitzpolster mittels Schnappverschluss-Stifte, die sich in dem Sitzpolster verhaken, befestigt ist.

Die EP 2 492 137 A2 beschreibt eine Belegungserfassungseinrichtung zum Detektieren des Belegungszustands eines Kraftfahrzeugsitzes mit einem Polsterkern und mit einem Foliendrucksensor, der in einer Aussparung an der einem Sitzenden abgewandten Unterseite des Polsterkerns angeordnet ist, wobei die Aussparung eine Bodenfläche mit einer Größe aufweist, die mindestens der Größe des Foliendrucksensors entspricht, und wobei der Foliendrucksensor durch eine Lagerplatte abgedeckt ist. Zwischen Bodenfläche der Aussparung und dem Foliendrucksensor ist mindestens eine Zwischenlage eingelegt, wobei diese erste Zwischenlage aus einem reversibel verformbaren und im Wesentlichen homogen strukturierten Material besteht. Mit einem solchen Aufbau soll eine Detektion des Belegungszustands des Sitzes geschaffen werden, die von der Materialstruktur des Polsterkerns unempfindlich ist und somit eine geringe Schwankungsbreite der Detektionsempfindlichkeit aufweist.

Die FR 2 853 057 A1 beschreibt eine Druckerfassungseinrichtung zur Erfassung eines lokalen Drucks auf einen flexiblen Körper, beispielsweise ein Sitzpolster. Auf einem Träger auf der Unterseite des Sitzpolsters sind zwei Drucksensoren positioniert. Diese Drucksensoren werden über zugeordnete Vorsprünge an einem Plattenelement, das an Lagerelementen gehalten ist, betätigt, wenn ein Druck auf das Plattenelement einwirkt.

Die WO 2019/149602 A1 betrifft ein Schaumteil eines Kraftfahrzeugsitzes, der mit einer Sitzbelegungserkennung ausgestattet ist. Das Schaumteil umfasst eine Sitzfläche und eine der Sitzfläche gegenüberliegende Unterseite. Im Bereich der Unterseite ist eine Anzahl Sitzbelegungserkennungs-Sensoren angeordnet und diese sind über eine Anzahl von Halteprofilen an dem Schaumteil zur Erfassung einer auf die Sitzfläche einwirkenden Gewichtskraft befestigt. Es wird auch ein Verfahren zur Herstellung eines solchen Schaumteils angegeben. In einer Ausführungsform sind die Sitzbelegungserkennungs-Sensoren im Bereich einer Ausnehmung an der Unterseite des Schaumteils mittels Halteprofilen angeordnet. Die Halteprofile weisen eine randseitige Nut auf, in die eine Halteplatte, die Teil des Sensors ist, eingeschoben wird. Mit dieser Anordnung ist keine sichere Verbindung bei Erschütterungen, die fortwährend beim Fahrzeugbetrieb auftreten, gegeben.

Es ist Aufgabe der Erfindung, einen Fahrzeugsitz mit einer Sensoreinheit zur Sitzbelegungserkennung anzugeben, bei dem die Sensoreinheit in einem einfachen Montagevorgang an einem Sitz befestigt werden kann und hierbei die Sensoreinheit jeweils eine exakte Position einnimmt. Eine weitere Aufgabe der Erfindung ist es, die Sensoreinheit zur Sitzbelegungserkennung unabhängig von einer ein Schaumpolster tragenden Struktur aufzubauen, die auch in einer Fontsitzgarnitur/Rücksitzbank einsetzbar ist und bei der Abstandstoleranzen zwischen Sensoreinheit und Schaumpolster im Hinblick auf die Empfindlichkeit reduziert werden.

Gelöst wird diese Aufgabe, durch einen Fahrzeugsitz mit den Merkmalen des Anspruchs 1. Bevorzugte Ausführungsformen sind in den abhängigen Ansprüchen angegeben.

Der Fahrzeugsitz ist mit einer Sensoreinheit zur Sitzbelegungserkennung ausgestattet. Die Sensoreinheit ist über mindestens eine Befestigungseinrichtung an dem Schaumpolster gehalten. Diese Befestigungseinrichtung weist ein dem Schaumpolster zugeordnetes Verankerungsteil auf. Dieses Verankerungsteil ist wiederum in ein in dem Schaumpolster integrierten Basisteil und mindestens ein von dem Schaumpolster vorstehendes Anschlussteil unterteilt. Der Sensoreinheit ist ein Verbindungselement zugeordnet, das in das Anschlussteil des Verankerungsteils kraft- und/oder formschlüssig eingreift. Die Sensoreinheit kann folglich durch einen einfachen Montagevorgang an dem Fahrzeugsitz angeordnet werden, indem es über dessen Verbindungselement(e) auf der B-Seite des Schaumpolsters befestigt wird. Durch das Basisteil der Befestigungseinrichtung, die dem Schaumpolster zugeordnet ist, wird die Sensoreinheit bzw. deren Trägerstruktur sicher an dem Schaumpolster verankert.

Vorzugsweise wird die Sensoreinheit über mindestens zwei Befestigungseinrichtungen gehalten, die die Trägerstruktur an gegenüberliegenden Seiten aufnehmen bzw. halten. Die jeweilige Verbindung zwischen dem Anschlussteil des Verankerungsteils und dem Verbindungselement der Trägerstruktur wird durch eine Nut-Feder-Verbindung gebildet. Durch diese Maßnahme kann das entsprechende Verbindungselement der Trägerstruktur, beispielsweise eine Feder, in das entsprechend ausgebildete Anschlussteil des dem Schaumpolster zugeordneten Verbindungselements, beispielsweise eine Nut, eingeschoben werden. Bevorzugt wird hierbei die Nut an dem Anschlussteil vorgesehen.

Die Trägerstruktur kann an den gegenüberliegenden Seiten mit mindestens zwei Verbindungselementen ausgestaltet sein, so dass die Verbindungselemente in einem gewissen Abstand zueinander, in horizontaler und/oder in vertikaler Richtung, angeordnet sind. Durch diese Maßnahme kann eine noch höhere Positioniergenauigkeit erreicht werden.

Es ist auch vorgesehen, dass die jeweilige Verbindung zwischen dem Verankerungsteil und dem der Trägerstruktur der Sensoreinheit zugeordneten Verbindungselement ineinanderrastende Teile aufweist, so dass die ineinandergreifenden Teile verriegelt sind. Diese ineinander einrastenden Teile können selbst die Verbindung herstellen, oder als zusätzliche Maßnahme eingesetzt werden, um ein Verschieben der verbundenen Elemente zu verhindern.

Die Sensoreinheit kann in einer Ausnehmung des Schaumpolsters angeordnet werden. Hierfür können zwei Verankerungsteile eingesetzt werden, die so an dem Schaumpolster positioniert sind, dass deren Anschlussteile von gegenüberliegenden Seitenwänden der Ausnehmung vorstehen und die Trägerstruktur der Sensoreinheit derart halten, dass die Sensoreinheit mit der Bodenfläche der Ausnehmung in Kontakt steht, so dass die Sensoreinheit über die Bodenfläche der Ausnehmung bei Belastung des Sitzes durch eine Person betätigt wird.

In einer weiteren Ausführungsform wird das Anschlussteil des Verankerungsteils in einer solchen Position angeordnet, dass es von der Unterseite des Sitzpolsters vorsteht und die Sensoreinheit mit der Unterseite des Sitzpolsters in Kontakt steht. Falls die Sensoreinheit in einer Ausnehmung des Schaumpolsters angeordnet ist, wie dies vorstehend beschrieben ist, ist die Bodenfläche der Ausnehmung als Unterseite des Sitzpolsters anzusehen.

Das Verbindungselement, das Teil der Trägerstruktur der Sensoreinheit ist, kann ein flügelartiges Flächenelement sein. Ein derartiges Flächenelement kann als Feder einer Nut-Feder-Verbindung zwischen dem Verbindungselement und dem Anschlussteil der Befestigungseinrichtung dienen.

Das Basisteil der Befestigungseinrichtung kann in das Schaumpolster eingeschäumt werden. Es kann aber auch von Vorteil sein, das Basisteil in einen Einschnitt oder Schlitz des Schaumpolsters einzustecken. Währen ein Einschäumen des Basisteils des Verankerungsteils mit der Herstellung des Schaumpolsters erfolgen muss, kann ein Einstecken des Basisteils des Verankerungsteils in einen Schlitz des Schaumpolsters nach der Herstellung des Schaumpolsters erfolgen.

Um eine zusätzliche Verankerung des Basisteils in dem Schaumpolster zu ermöglichen, wird das Basisteil zumindest teilweise als Lochplatte ausgeführt. Als Lochplatte wird eine Platte oder ein plattenförmiges Teil angesehen, das mehrere Löcher oder Schlitze aufweist, in die sich der Schaum des Schaumpolsters hineindrückt, unabhängig davon, ob das Basisteil in das Schaumpolster eingeschäumt ist oder ob das Basisteil in einen Schlitz des Schaumpolsters eingesteckt ist.

Das Basisteil des Verankerungsteils, das in dem Material des Schaumpolsters integriert ist, kann einen Federarm-Abschnitt aufweisen, der zum einen als zusätzliche Verankerungshilfe dient und zum anderen einen federnd nachgiebigen Bereich darstellt, wenn sich das Schaumpolster unter einer Sitzbelegung zusammendrückt. Weitere Einzelheiten ergeben sich aus der nachfolgenden Beschreibung von Beispielen anhand der Zeichnung. In der Zeichnung zeigt
- Figur 1: eine schematische Schnittdarstellung des unteren Teils, d. h. der B-Seite, eines Schaumpolsters eines Fahrzeugsitzes mit daran angeordneter Sensoreinheit gemäß einer nicht zu der Erfindung gehörenden ersten Ausführungsform,
- Figur 2: eine Schnittdarstellung entsprechend der Figur 1 gemäß einer weiteren nicht zu der Erfindung gehörenden Ausführungsform einer Befestigung der Sensoreinheit an dem Sitzpolster,
- Figur 3: eine dritte nicht zu der Erfindung gehörende Ausführungsform, die keine Nut-Feder-Verbindung zeigt,
- Figur 4: eine vierte nicht zu der Erfindung gehörende Ausführungsform mit zusätzlichem, fahrzeugseitigem Wannenteil,
- Figur 5: eine Schnittdarstellung einer nicht zur Erfindung gehörenden Ausführungsform,bei der die Sensoreinheit in einer Ausnehmung des Schaumpolsters angeordnet ist,
- Figur 6: eine Sensoreinheit mit einer nicht zur Erfindung gehörenden Ausführungsform einer Trägerstruktur, wie sie in den Ausführungsformen der Figuren 1 bis 5 eingesetzt ist,
- Figur 7: ein Basisteil einer nicht zur Erfindung gehörenden Ausführungsform des dem Schaumpolster zugeordneten Verankerungsteils in einer perspektivischen Darstellung,
- Figur 8: eine Draufsicht auf ein Basisteil vergleichbar mit demjenigen der Figur 7 mit zusätzlichen Verankerungsschlitzen und
- Figur 9: ein Basisteil, vergleichbar mit demjenigen der Figur 7, und ein diesem zugeordnetes Verbindungselement der Trägerstruktur der Sensoreinheit, die eine Ausführungsform gemäß der Erfindung darstellt.

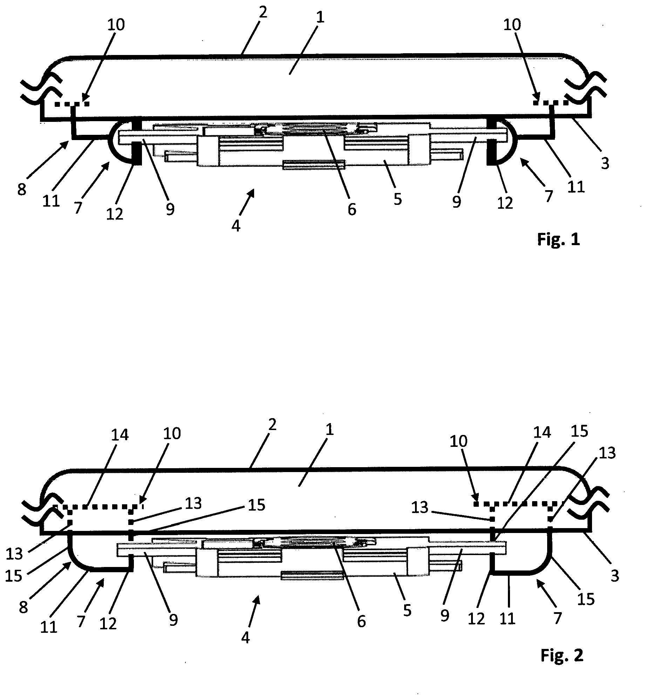

Die Figuren 1 bis 5 zeigen in einer Schnittdarstellung ein Schaumpolster 1 eines Fahrzeugsitzes oder einer Fontsitzgarnitur, auf dessen der Sitzseite 2 abgewandten Unterseite 3, auch als B-Seite des Schaumpolsters des Fahrzeugsitzes bezeichnet, eine Sensoreinheit 4 zur Sitzbelegungserkennung angeordnet ist.

Die Sensoreinheit 4 umfasst eine Trägerstruktur 5, auf der eine Sensoreinheit 4 mit mindestens einem Sensorelement 6, vorzugsweise ein Foliendrucksensor, angeordnet ist. Diese Sensoreinheit 4 und damit deren Sensorelement 6 ist derart zu der Unterseite 3 des Polsters 1 positioniert, dass bei Belastung des Schaumpolsters das Sensorelement 6 anspricht und so eine Sitzbelegung anzeigt. Als Sensorelement kann auch ein anderes Schaltelement, insbesondere ein mechanischer Schalter, eingesetzt werden.

Die Sensoreinheit 4 ist an gegenüberliegenden Seiten der Trägerstruktur 5 über jeweils eine Befestigungseinrichtung 7 gehalten. Jede dieser Befestigungseinrichtungen 7 ist aus einem dem Schaumpolster 1 zugeordnetes Verankerungsteil 8 und einem der Trägerstruktur 5 zugeordnetes Verbindungselement 9 zusammengesetzt. Das einstückig aufgebaute Verankerungsteil 8 ist in ein Basisteil 10 und ein Anschlussteil 11 unterteilt. Das Basisteil 10 wird als derjenige Abschnitt des Verankerungsteils 8 bezeichnet, der in das Schaumpolster 1 integriert ist, während das Anschlussteil 11 als derjenige Abschnitt des Verankerungsteils 8 bezeichnet wird, der von der Unterseite 3 des Schaumpolsters 1 vorsteht.

Das jeweilige Verbindungselement 9 der Trägerstruktur 5 der Sensoreinheit 4 ist ein laschenförmiges bzw. laschenartiges oder flügelförmiges bzw. flügelartiges Flächenelement 9, wie die in Figur 6 dargestellte Sensoreinheit 4 verdeutlicht.

Die Sensoreinheit 4 wird mittels der an der Trägerstruktur 5 angeordneten Verbindungselemente 9 in die Endabschnitte 12 der Anschlussteile 11 der Befestigungseinrichtung 7 geschoben, wie dies aus den Figuren 1, 2 und 5 ersichtlich ist. Hierbei ist anzumerken, das in diesen Figuren lediglich eine Art Endposition angedeutet ist, d.h. nachdem die Sensoreinheit 4 entsprechend in die jeweiligen Endabschnitte 12 der Anschlussteile 11 eingeschoben ist.

Wie die Ausführungsform der Figur 1 zeigt, ist das freie Ende des Anschlussteils 11 des Verankerungsteils 8, das bedeutet dessen Endabschnitt 12, als Nut mit einem C-förmigen oder U-förmigen Querschnitt ausgebildet. In diese Nuten der beiden Verankerungsteile 8 ist das jeweilige laschenförmige bzw. laschenartige oder flügelförmige bzw. flügelartige Flächenelement 9 eingesetzt, wozu die Flächenelemente 9 der Sensoreinheit 4 senkrecht zur Zeichnungsebene eingeschoben werden. Hierdurch ist eine einfache Montage der Sensoreinheit 4 auf der Unterseite 3 des Schaumpolsters 1 über die durch den jeweiligen Endabschnitt 12 und das jeweilige Flächenelement 9 gebildete Nut-Feder-Verbindung möglich.

Das Basisteil 10 des Verankerungsteils 8 wird in das Schaumpolster 1 eingeschäumt, so dass es fest in dem Schaum des Schaumpolsters 1 verankert ist. In einer weiteren Ausführungsform, die besonders bevorzugt ist, wird in dem Schaumpolster 1 ein dem Basisteil 10 des Verankerungsteils 8 in der Form und dem Verlauf entsprechender Einschnitt oder Schlitz ausgeführt, in den dann anschließend das Basisteil 10 eingesteckt wird. In vorteilhafter Weise liegt das Schaummaterial des Schaumpolsters 1 an allen Seiten des Basisteils 10 eng an. Zusätzlich kann das Basisteil 10 in dem Einschnitt oder Schlitz verklebt werden.

Die Ausführungsform, wie sie in Figur 2 dargestellt ist, unterscheidet sich von derjenigen der Figur 1 dadurch, dass der in dem Schaum des Schaumpolsters 1 verankerte Teil des Verankerungsteils 8, d. h. das Basisteil 10, aus zwei Stegen 13 besteht, die an ihren Enden über einen Quersteg 14 miteinander verbunden sind und die sich an der Unterseite 3 des Schaumpolsters 1 in zwei Arme 15 des Anschlussteils 11 fortsetzen und zwischen deren Enden eine Nut gebildet ist, in die sich das Verbindungselement 9 klemmend einfügt.

Bei der dritten Ausführungsform, die in Figur 3 gezeigt ist, ist das Anschlussteil 11 des jeweiligen Verankerungsteils 8 winkelförmig ausgebildet, so dass sich das jeweilige als Flächenelement ausgeführte Verbindungselement 9 der Trägerstruktur 5 auf das Anschlussteil 11 derart auflegt, dass es zwischen dem Schenkel des Anschlussteils 11 und der Unterseite 3 des Schaumpolsters 1 positioniert ist. Zusätzlich ist das jeweilige Verbindungselement 9 an dem Anschlussteil 11 mit einem Stift 16 verriegelt und gesichert. Als Stift 16 kann eine Schraube, eine Niete oder auch ein Pin mit Rasteilen, die sich in einer Bohrung des Verbindungselements 9 verhaken, verwendet werden. Diese Ausführungsform zeigt keine Nut-Feder-Verbindung.

In der vierten Ausführungsform, die in Figur 4 gezeigt ist, besitzt das Basisteil 10 des Verankerungsteils 8 einen als Federarm ausgebildeten Abschnitt 17 und das mit diesem Federarm-Abschnitt 17 verbundene Anschlussteil 11 des Verankerungsteils 8 ist T-förmig ausgebildet. Das Verbindungselement 9 der Trägerstruktur 5 weist beispielsweise einen zum Ende hin offenen Schlitz auf, so dass er auf das tellerförmige Ende des T-förmigen Anschlussteils 11 aufgelegt werden kann. Der als Federarm ausgebildete Abschnitt 17 des Basisteils 10, der sich innerhalb des Schaumpolsters 1 befindet, schafft einen Bereich, innerhalb dem das Basisteil 10 federnd einer Bewegung des Schaumpolsters 1, wenn dieses auf der Sitzseite 2 des Schaumpolsters 1 belastet wird, folgen kann. Der Federarm-Abschnitt 17 kann die Form einer mehrfach gefalteten Blattfeder oder einer Schraubenfeder haben.

In Figur 4 ist auf der Unterseite 3 des Schaumpolsters 1 eine fahrzeugseitige Sitzwanne 18 angedeutet, die die Unterseite 3 des Schaumpolsters 1 abdeckt bzw. abstützt und auch eine zusätzliche Auflage für die Trägerstruktur 5 der Sensoreinheit 4 bildet.

In der Ausführungsform, die in Figur 5 dargestellt ist, ist die Sensoreinheit 4 in einer Ausnehmung 19 des Schaumpolsters 1, die eine Bodenfläche 20 und Seitenwände 21 aufweist, eingesetzt. Das Anschlussteil 11 des jeweiligen Verankerungsteils 8 steht von der Seitenwand 21 der Ausnehmung 19 vor. Das freie Ende des Anschlussteils 11 ist entsprechend der in Figur 1 gezeigten Ausführungsform mit einem C- oder U-förmigen Querschnitt als Nut ausgebildet, in die das flächenartige Verbindungselement 9 der Trägerstruktur 5 der Sensoreinheit 4 in Form einer Nut-Feder-Verbindung eingesetzt ist, so dass die Sensoreinheit 4 an zwei gegenüberliegenden Enden der Trägerstruktur 5 gehalten ist.

In der Ausführungsform der Figur 5 ist die Sensoreinheit 4 so positioniert, dass sie mit der Bodenfläche 20 der Ausnehmung 19 in Kontakt steht. Auch für die Ausführungsformen der Figuren 1 bis 4 wird die Sensoreinheit 4 so angeordnet, dass sie an der Unterseite 3 des Schaumpolsters 1 anliegt, so dass eine Druckübertragung von dem Schaumpolster 1 auf die Sensoreinheit 4 ohne zeitliche Verzögerung auftritt.

Die Figur 6 zeigt einen detaillierten Aufbau der Sensoreinheit 4, wie sie in den Ausführungsformen entsprechend den Figuren 1 bis 5 verwendet wird. Die Trägerstruktur 5 der Sensoreinheit 4 ist ein im Wesentlichen plattenförmiges Element mit einem zentralen Bereich 22, der das Sensorelement 6, beispielsweise ein solches mit drei einzelnen Sensorzellen 23, aufnimmt. Außerdem sind alle Anschlüsse des Sensorelements 6 zu einem Anschlussbereich 24 geführt. Alle Anschlüsse können über diesen Anschlussbereich 24 oder direkt zu einer nicht näher gezeigten Steckverbindung, bevorzugt am Rand der Trägerstruktur 5, geführt sein, so dass dann, wenn die Sensoreinheit 4 an den Verankerungsteilen 8 befestigt wird, beispielsweise indem sie in die Endabschnitte 12 der Anschlussteile 11 eingeschoben wird, gleichzeitig eine elektrische Verbindung mit einer Auswerteeinheit der Sitzbelegungserkennung erhalten wird.

Die Verbindungselemente 9, wie sie an der Trägerstruktur 5 der Sensoreinheit 4 vorgesehen sind, können strukturiert werden, beispielsweise mit Vorsprüngen und Hinterschneidungen, so dass entsprechend strukturierte Bereiche des jeweiligen Anschlussteils 11 in entsprechend strukturierte Bereiche des Verbindungselements 9 eingreifen und sich gegebenenfalls mit dem Verbindungselement 9 zusätzlich verrasten oder sich verhaken.

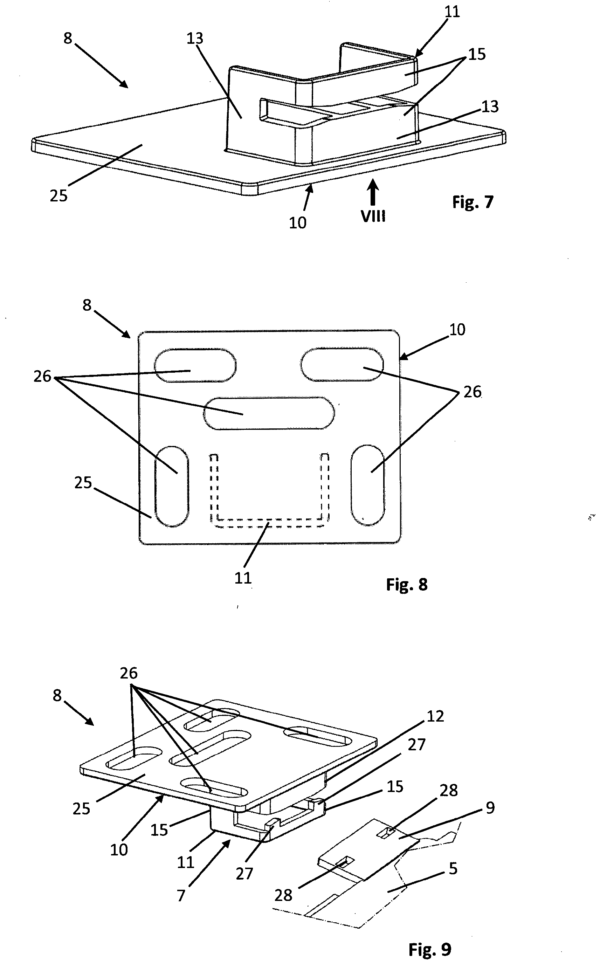

In den Figuren 7 bis 9 sind verschiedene Verankerungsteile 8 gezeigt, wie sie in den Ausführungsformen der Figuren 1 bis 5 eingesetzt werden können.

Das Verankerungsteil 8 der Figur 7 und dasjenige der Figur 9 ist mit demjenigen vergleichbar, das in der Ausführungsform der Figur 2 schematisch im Querschnitt dargestellt ist. Das Basisteil 10, auch als Grundplatte 25 bezeichnet, stellt eine gute Verankerung in dem Schaum des Schaumpolsters 1 sicher. Von dem Basisteil 10 erstrecken sich, etwa senkrecht zu deren Flächenebene, die Stege 13, die sich in Arme 15 des Abschnitts fortsetzen, der das Anschlussteil 11 des Verankerungsteils 8 bildet. Die Enden bzw. Kanten der beiden Arme 15 liegen so gegenüber, dass ein Spalt oder eine Nut vorhanden ist, in die sich dann das Verbindungselement 9 der Trägerstruktur 5 einfügt. Der eine Arm 15 des Anschlussteils 11 ist geringfügig derart federnd ausgeführt, dass sich beim Einfügen des Verbindungselements 9 die Öffnungsweite der Nut vergrößert und entsprechend das Verbindungselement 9 zwischen den Armen 15 eingeklemmt wird, um die Sensoreinheit 4 an den Verankerungsteil 8 sicher zu befestigen.

Die Figur 8 zeigt eine Draufsicht auf ein Verankerungsteil 8 entsprechend demjenigen, das in Figur 7 gezeigt ist, aus Richtung des Sichtpfeils VIII in Figur 7. In der Grundplatte 25 bzw. dem Basisteil 10 sind mehrere Schlitze 26 vorhanden, die eine Art Verankerungsöffnungen bilden, in die der Schaum des Schaumpolsters 1 eindringen kann und so das Basisteil 10 zusätzlich verankert.

Die Figur 9 zeigt ein Verankerungsteil 8 in einer perspektivischen Darstellung entsprechend demjenigen, das in den Figuren 7 und 8 dargestellt ist, aus Richtung des Sichtpfeils VIII in Figur 7, wobei in Figur 9 zusätzlich ein der Befestigungseinrichtung 7 zugeordnetes, angepasstes Verbindungselement 9 der Trägerstruktur 5 gezeigt ist. Die Figur 9 zeigt jedoch in der Grundplatte 25 bzw. dem Basisteil 10 mehrere Schlitze 26, die auch in dem Verankerungsteil 8 der Figur 8 gezeigt sind, jedoch nicht in der Figur 7. Verglichen mit der Ausführungsform, wie sie in Figur 7 dargestellt ist, besitzt der eine Arm 15 der Ausführungsform der Figur 9, der sich weiter entfernt von dem Basisteil 10 befindet, an seiner freien Kante zwei Vorsprünge 27. Wenn das Verbindungselement 9 der Trägerstruktur 5 in das Anschlussteil 11 des Verankerungsteils 8 eingesetzt bzw. eingeschoben ist, greifen die zwei Vorsprünge 27 in korrespondierende Ausnehmungen oder Durchgangslöcher 28 in dem Verbindungselement 9 ein und verriegeln auf diese Weise das Verbindungselement 9 zusätzlich an dem Anschlussteil 11. Die Figur 9 zeigt darüber hinaus einen Teilausschnitt des Verbindungselements 9 der Trägerstruktur 5 entsprechend demjenigen, das in Figur 6 gezeigt ist. Die Form und die Anzahl der Durchgangslöcher 28 und der dazu korrespondierenden Vorsprünge 27 sind nicht auf diejenigen beschränkt, die in Figur 9 dargestellt sind.

## Patentansprüche

1. Fahrzeugsitz mit einer Sensoreinheit zur Sitzbelegungserkennung, die auf der der Sitzseite eines Schaumpolsters (1) abgewandten Unterseite (3) angeordnet ist und bei Belastung des Schaumpolsters (1) an diesem zumindest teilweise anliegt, wobei die Sensoreinheit (4) eine Trägerstruktur (5) umfasst, an oder auf der mindestens ein Sensorelement (6) angeordnet ist, wobei die Sensoreinheit (4) über mindestens eine Befestigungseinrichtung (7), die mindestens ein dem Schaumpolster (1) zugeordnetes, einstückiges Verankerungsteil (8) aufweist, das ein in dem Schaumpolster (1) integriertes Basisteil (10) und mindestens ein von dem Schaumpolster (1) vorstehendes Anschlussteil (11) aufweist und mindestens ein der Trägerstruktur (5) zugeordnetes Verbindungselement (9) aufweist, an dem Schaumpolster (1) angeordnet ist, wobei eine jeweilige Verbindung zwischen dem Anschlussteil (11) des Verankerungsteils (8) und dem Verbindungselement (9) der Trägerstruktur (5) eine über eine Nut-Feder-Verbindung kraft- und/oder formschlüssig ineinandergreifende Verbindung ist, **dadurch gekennzeichnet, dass** sich ein Arm (15) an dem Anschlussteil (11) der Befestigungseinrichtung (7) fortsetzt und der Arm (15) an seiner freien Kante mindestens einen Vorsprung (27) aufweist, der in eine korrespondierende Ausnehmung oder ein korrespondierendes Durchgangsloch (28) in dem Verbindungselement (9) eingreift und das Verbindungselement (9) zusätzlich an dem Anschlussteil (11) einrastend verriegelt.

2. Fahrzeugsitz nach Anspruch 1, **dadurch gekennzeichnet, dass** die Sensoreinheit (4) über mindestens zwei Befestigungseinrichtungen (7) gehalten ist, die die Trägerstruktur (5) an gegenüberliegenden Seiten halten.

3. Fahrzeugsitz nach einem der Ansprüche 1 bis 2, **dadurch gekennzeichnet, dass** die Sensoreinheit (4) in einer Ausnehmung (19) des Schaumpolsters (1), die eine Bodenfläche (20) und Seitenwände (21) aufweist, angeordnet ist.

4. Fahrzeugsitz nach Anspruch 3, **dadurch gekennzeichnet, dass** das Anschlussteil (11) des Verankerungsteils (8) von einer Seitenwand (21) der Ausnehmung (19) vorsteht.

5. Fahrzeugsitz nach einem der Ansprüche 1 bis 3, **dadurch gekennzeichnet, dass** das Anschlussteil (11) des Verankerungsteils (8) von der Unterseite (3) des Schaumpolsters (1) vorsteht.

6. Fahrzeugsitz nach Anspruch 2, **dadurch gekennzeichnet, dass** das Verbindungselement (9) ein flügelartiges Flächenelement (9) ist.

7. Fahrzeugsitz nach einem der Ansprüche 1 bis 6, **dadurch gekennzeichnet, dass** das Basisteil (10) in das Schaumpolster (1) eingeschäumt ist.

8. Fahrzeugsitz nach einem der Ansprüche 1 bis 6, **dadurch gekennzeichnet, dass** das Basisteil (10) in einen Einschnitt des Schaumpolsters (1) eingesteckt ist.

9. Fahrzeugsitz nach einem der Ansprüche 1 bis 8, **dadurch gekennzeichnet, dass** das Basisteil (10) zumindest teilweise als Platte (25) mit Öffnungen (26) ausgeführt ist.

10. Fahrzeugsitz nach einem der Ansprüche 1 bis 9, **dadurch gekennzeichnet, dass** das Basisteil (10) einen Federarm-Abschnitt (17) aufweist.

## Claims

1. Vehicle seat with a sensor unit for seat occupancy detection, which is arranged on the underside (3) facing away from the seat side of a foam cushion (1) and, when the foam cushion (1) is loaded, bears at least partially against the latter, wherein the sensor unit (4) comprises a support structure (5) at or on which at least one sensor element (6) is arranged, the sensor unit (4) having at least one fastening device (7) which has at least one one-piece anchoring part (8) which is assigned to the foam cushion (1) and has a base part (10) integrated in the foam cushion (1) and at least one connecting part (11) projecting from the foam cushion (1) and has at least one connecting element (9) assigned to the support structure (5), is arranged on the foam pad (1), wherein a respective connection between the connecting part (11) of the anchoring part (8) and the connecting element (9) of the carrier structure (5) is a connection which engages in one another in a force-locking and/or formlocking manner by means of a tongue-and-groove connection, **characterized in that** an arm (15) continues on the connecting part (11) of the fastening device (7) and the arm (15) has at its free edge at least one projection (27) which engages in a corresponding recess or a corresponding through-hole (28) in the connecting element (9) and additionally locks the connecting element (9) in a latching manner on the connecting part (11).

2. Vehicle seat according to claim 1, **characterised in that** the sensor unit (4) is held via at least two fastening devices (7) which hold the support structure (5) on opposite sides.

3. Vehicle seat according to any one of claims 1 to 2, **characterised in that** the sensor unit (4) is arranged in a recess (19) of the foam cushion (1) having a bottom surface (20) and side walls (21).

4. Vehicle seat according to claim 3, **characterised in that** the connection part (11) of the anchoring part (8) projects from a side wall (21) of the recess (19).

5. Vehicle seat according to one of the claims 1 to 3, **characterised in that** the connecting part (11) of the anchoring part (8) projects from the underside (3) of the foam cushion (1).

6. Vehicle seat according to claim 2, **characterised in that** the connecting element (9) is a wing-like surface element.

7. Vehicle seat according to one of the claims 1 to 6, **characterised in that** the base part (10) is foamed into the foam cushion (1).

8. Vehicle seat according to one of the claims 1 to 6, **characterised in that** the base part (10) is inserted into a notch of the foam cushion (1).

9. Vehicle seat according to one of the claims 1 to 8, **characterised in that** the base part (10) is at least partially designed as a plate (25) with openings (26).

10. Vehicle seat according to one of the claims 1 to 9, **characterised in that** the base part (10) has a spring arm section (17).

## Revendications

1. Siège de véhicule avec une unité capteur pour distinguer l'occupation du siège, qui est disposée sur le côté inférieur (3) opposé au côté siège d'un coussin en mousse (1) et repose au moins partiellement sur le coussin en mousse (1) lorsque celui-ci est chargé, où l'unité capteur (4) comprend une structure de support (5) contre ou sur laquelle au moins un élément capteur (6) est disposé, où l'unité capteur (4) est disposée contre le coussin en mousse (1) par l'intermédiaire d'au moins un dispositif de fixation (7) qui comporte au moins une partie d'ancrage (8) d'une pièce, associée au coussin en mousse (1), qui comporte une partie de base (10) intégrée dans le coussin en mousse (1) et au moins une partie de jonction (11) faisant saillie du coussin en mousse (1) et comporte au moins un élément de liaison (9) associé à la structure de support (5), où une liaison respective entre la partie de jonction (11) de la partie d'ancrage (8) et l'élément de liaison (9) de la structure de support (5) est une liaison à emboîtement par assemblage de force et/ou de forme par l'intermédiaire d'une liaison à rainure et languette, **caractérisé en ce qu'**un bras (15) dépasse au niveau de la partie de jonction (11) du dispositif de fixation (7), et le bras (15) comporte sur son bord libre au moins une saillie (27) qui s'engage dans un évidement correspondant ou un trou traversant correspondant (28) dans l'élément de liaison (9) et l'élément de liaison (9) s'enclenche en outre sur la partie de jonction (11).

2. Siège de véhicule selon la revendication 1, **caractérisé en ce que** l'unité capteur (4) est maintenue par l'intermédiaire d'au moins deux dispositifs de fixation (7) qui maintiennent la structure de support (5) au niveau de côtés opposés.

3. Siège de véhicule selon l'une des revendications 1 à 2, **caractérisé en ce que** l'unité capteur (4) est disposée dans un évidement (19) du coussin en mousse (1) qui comporte une surface inférieure (20) et des parois latérales (21).

4. Siège de véhicule selon la revendication 3, **caractérisé en ce que** la partie de jonction (11) de la partie d'ancrage (8) fait saillie d'une paroi latérale (21) de l'évidement (19).

5. Siège de véhicule selon l'une des revendications 1 à 3, **caractérisé en ce que** la partie de jonction (11) de la partie d'ancrage (8) fait saillie du côté inférieur (3) du coussin en mousse (1).

6. Siège de véhicule selon la revendication 2, **caractérisé en ce que** l'élément de liaison (9) est un élément de surface en forme d'aile (9).

7. Siège de véhicule selon l'une des revendications 1 à 6, **caractérisé en ce que** la partie de base (10) est entourée de mousse dans le coussin en mousse (1).

8. Siège de véhicule selon l'une des revendications 1 à 6, **caractérisé en ce que** la partie de base (10) est insérée dans une entaille du coussin en mousse (1).

9. Siège de véhicule selon l'une des revendications 1 à 8, **caractérisé en ce que** la partie de base (10) est au moins partiellement réalisée sous la forme d'une plaque (25) avec des ouvertures (26).

10. Siège de véhicule selon l'une des revendications 1 à 9, **caractérisé en ce que** la partie de base (10) comporte une section de bras élastique (17).
